# EUROPEAN PATENT APPLICATION

(11) **EP 1 306 653 A1**
(43) Date of publication of application: **02.05.2003**
(21) Application number: 02257361.2
(22) Date of filing: 23.10.2002
(51) Int. Cl.: G01K 17/12

(54) **Water management system**

(30) Priority: 29.10.2001 US 55164
(71) Applicant: Smith, Wade W., Skillman, New Jersey 08558 (US)
(72) Inventor: Smith, Wade W., Skillman, New Jersey 08558 (US)
(74) Representative: Warren, Anthony Robert

(57) **Abstract**

A system is disclosed for determining the use of heating/cooling energy in a remote heat exchanger (12). The temperature and pressure at either side of the heat exchanger (12) are periodically monitored by pressure/temperature transducers (P/T14) and the delta temperature times the square root of the pressure difference are accumulated by a register/transmitter device (R/T18) for periodic transmission to a host computer (HC 12) for energy use calculation.

## Description

A conventional way of heating or cooling an apartment or the like is to supply hot or cold water to a heat transfer device (heat exchanger) which uses the hot or cold water to heat or cool air surrounding the heat transfer device. The present invention relates to a system for computing the cost of heating or cooling energy used to heat or cool an apartment or the like by such a device.

Today there is a great emphasis on conserving energy. It is believed that when people have to pay for the energy they use, they conserve more. U.S. Patents Nos. 5,838,258 and 6,101,451, disclose systems wherein each pipe, which supplies a heat transfer device such as the heat exchanger in a fan-coil unit, has a monitor, located on either side of the heat transfer device having a flowmeter attached thereto to determine the flow of the pipe. Each flowmeter may include a suitable sensor for sensing the temperature of the water flowing through the pipe upstream and downstream of the heat exchanger. By multiplying the units of flow by the change in temperature between the inlet and outlet of the heat exchanger a remote computer can compute the energy use at the heat transfer device.

It is an object of the present invention to reduce the cost and improve the reliability of a heat measuring system by eliminating the rotating parts typically associated with flow sensing in such a system.

According to the present invention there is provided a system for monitoring the use of heat energy use of a heat transfer device within an apartment unit, comprising
a register/transmitter,
a pair of pressure/temperature transducers to be connected proximate the upstream and downstream sensing points of a heat transfer device for supplying temperature and pressure data to said register/transmitter,
said register/transmitter including
   computational means for periodically multiplying the square root of the change in pressure times the change in temperature from the pressure and temperature data supplied from said pair of pressure/temperature transducers,
   accumulating means for accumulating the computed square root of the change in pressure times the change in temperature, and
   means for periodically transmitting information identifying the heat transfer device, and the accumulated computed square root of the change in pressure times the change in temperature.

Reference will now be made to the accompanying drawings which illustrate a presently preferred embodiment incorporating the principles of the invention, and in which:-
Figure 1 is a schematic drawing of a system for determining the heat energy used by heating devices in an apartment complex or the like;
Figure 2 is a schematic drawing illustrating one of the heating devices;
Figure 3 is an oblique view, partly in section, of a temperature/pressure transducer, embodying the teachings of the present invention, clamped to a water pipe;
Figure 4 is another oblique view, partly in section of the temperature/pressure transducer shown in figure 3;
Figure 5 is a cross sectional view of the pressure/temperature sensing module schematically assembled with structure for loading the module with oil;
Figure 6 is an oblique view of the diaphragm as shown in Figure 5,
Figure 7 is an oblique view of the support cup shown in Figure 5;
Figure 8 is a chart illustrating the determination of a flow constant;
Figure 9 is a chart illustrating the processing of pressure data proximate the heat transfer device;
Figure 10 is a chart illustrating the processing of temperature data proximate the heat transfer device; and
Figure 11 is a chart illustrating the computation of transmittable data.

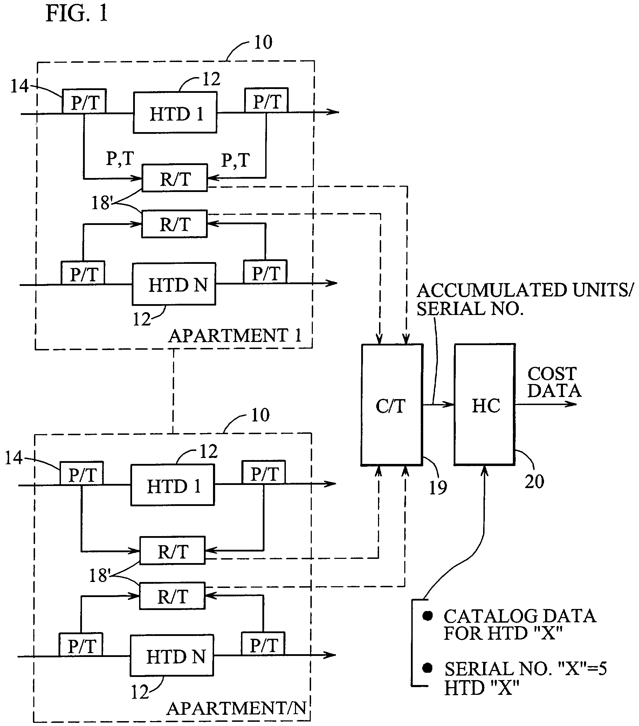

Figure 1 schematically illustrates a plurality of apartment units 10 in an apartment complex or the like, each of which may include any number of heat transfer devices or heat exchangers (HTD1,...HTDN) 12. A pressure/temperature transducer (P/T) 14, which could be a solid state device, senses the pressure and temperature of water flowing upstream of the heat transfer device and a second pressure/temperature transducer (P/T) 14 reads the pressure and temperature of the water flowing downstream of the heat transfer device.

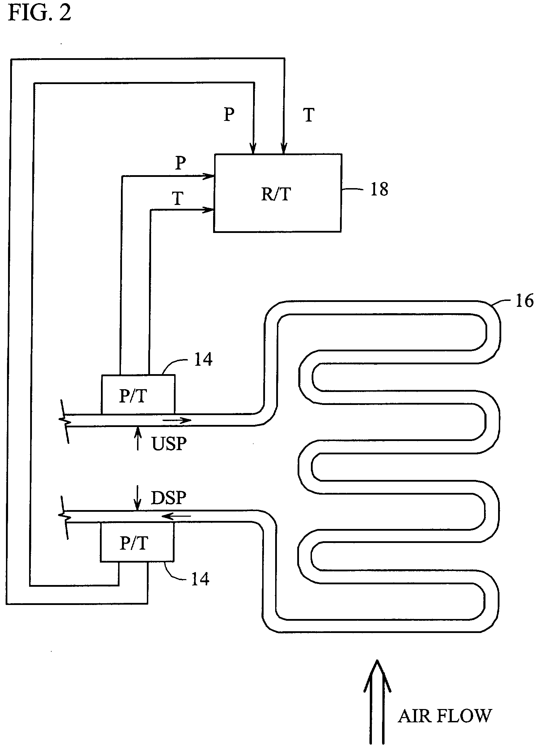

Figure 2 schematically illustrates a serpentine tube or coil 16 heat transfer exchanger (device) with the upstream pressure/temperature transducer connected to the water pipe at the upstream sensing point (USP) and the downstream pressure/temperature transducer connected to the water pipe at the downstream sensing point (DSP). As shown air flow (hot/cold air) flowing across the coil effects the heat transfer.

Pressure (P) and temperature (T) data for each heat transfer device is supplied to a register/transmitter R/T 18 which computes Accumulated Units and transmits them along with identification information, for example the serial no., of the heat transfer device to a collecting/transmitter C/T 19 (Figure 1) which retains data for a number of heat transfer devices and periodically transmits this data to a host computer HC 20 which will compute the Cost Data for the energy used.

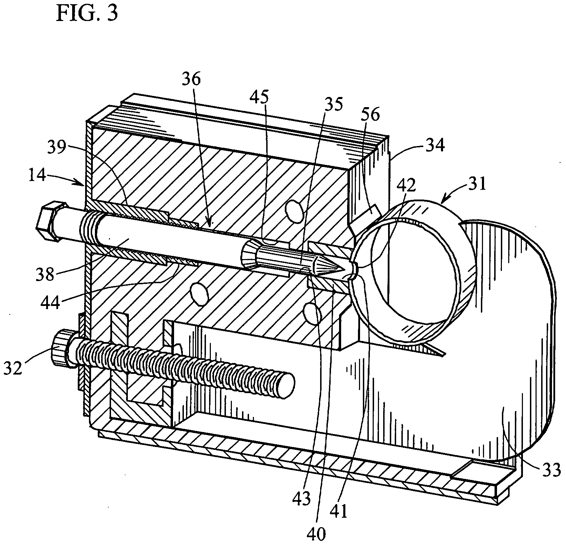

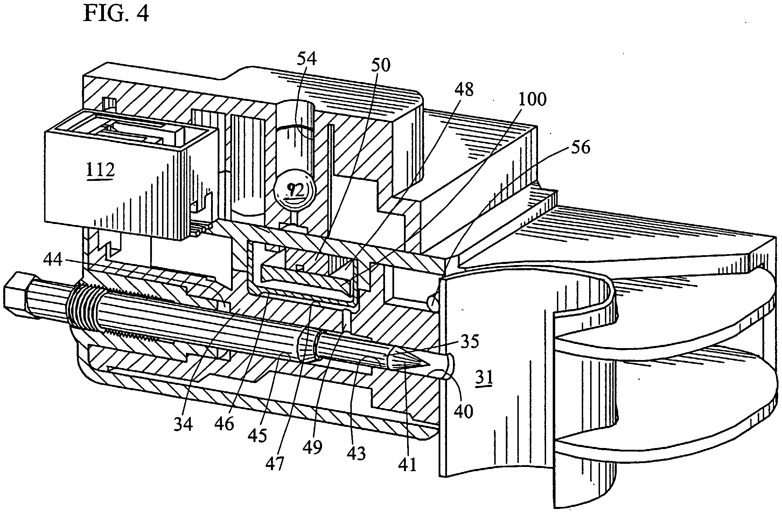

Figures 3 and 4 illustrate a pressure/temperature transducer P/T 14 which is clamped onto a water pipe 31 much like a saddle valve, by tightening a clamping bolt 32 to advance a jaw 33 to clamp the housing 34 to the water pipe proximate a piercing needle 35. Once clamped, the piercing needle can be extended until the pipe wall is pierced, by rotating the body 38 of the piercing needle, which is threadedly received by an internally threaded sleeve 39 in the housing 34 of the pressure sensing device. Surrounding the piercing needle, proximate the pipe is an annular compression seal 40, which effectively seals the pierced hole 42. The compression seal 40 has a through hole 41 larger than the piercing needle. A second seal 44 seals the body 38 of the piercing needle and the housing bore 45 in which the body moves. When the piercing needle is retracted, water will pass through the pierced hole 42, through the hole in the compression seal 41, through a needle guide hole 43 in the housing, into the housing bore 45 along the piercing needle and through a hole 49 (Figure 4) into a chamber 47 between the housing 34 and a flexible diaphragm 46, which also defines the bottom of an upper sealed chamber 48 in which a solid state pressure sensor 50 is located. The housing additionally supports a temperature sensor (thermistor, for example) 56 that is clamped against the pipe wall when the housing is clamped in position.

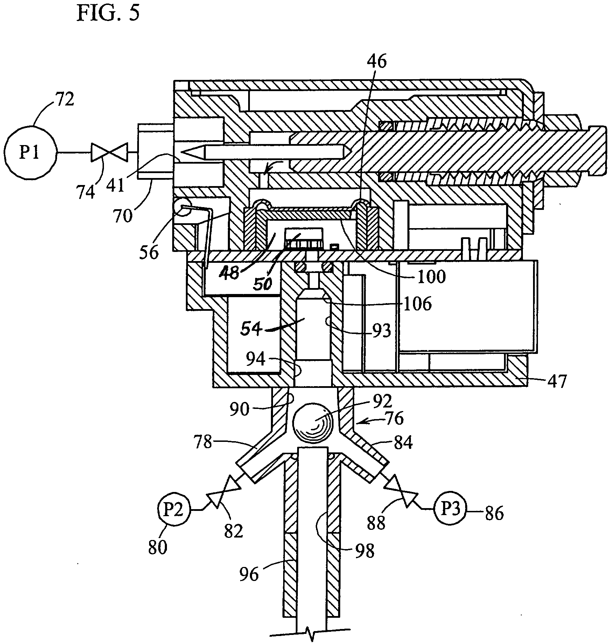

Oil or other non-compressible liquid, such as silicon oil, is permanently captured within this chamber 47 in the manner shown in Figure 5. A first port 70 is connected to the housing 34 at the compression seal bore 41 by establishing a suitable face seal, for example. This port is connected to a source of diaphragm preload pressure P1/72 (10-20 PSI) and the pressure source can be turned on and off with a suitable valve 74. A chuck 76 is also connected to the housing 34 at an oil inlet or fill hole 54 by establishing a suitable face seal, for example. The chuck has a first port 78 which is connected to a source of oil under pressure P2 80 and this pressure source can be turned on and off with a suitable valve 82. The chuck has a second port 84 which is connected to a source of vacuum P3 86 and the vacuum source can be turned on and off with a suitable valve 88. The chuck has an exit bore 90 for receiving a metallic sealing ball 92 which is sized to be larger than a reduced diameter portion 93 of the oil inlet hole and smaller than the enlarged diameter portion 94 of the inlet hole. The juncture of the reduced diameter portion and the enlarged diameter portion 94 of the oil inlet hole defines the location in the hole where the reduced diameter portion will be sealed by the ball. The chuck also supports a displaceable plunger 96 which is sealed within its hole 98 and which will not move when P2 is applied (rearward displacement past the shown position may be prevented with a key/keyway interconnection, for example).

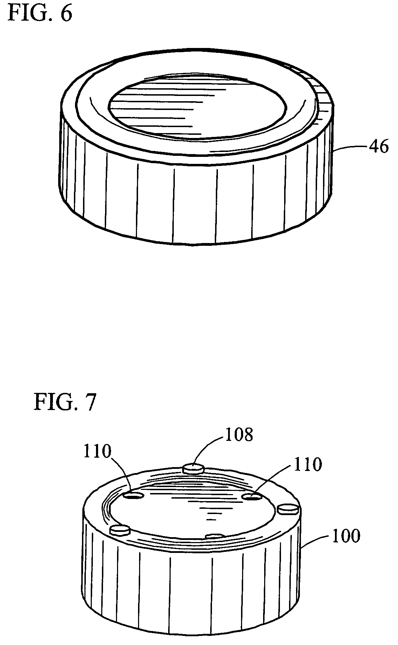

With valves 82 and 88 closed and valve 74 open P1 is applied to deflect the top of the diaphragm 46 down against a support cup 100. Figure 6 illustrates the diaphragm at this time and Figure 7 illustrates the support cup. Now, valve 88 is opened and vacuum is applied to eliminate all the air intermediate the diaphragm and the valve. When this is complete valve 88 is closed and valve 82 is opened to fill the space between the diaphragm and the valve. P2 is less than P1 so that the top of the diaphragm will not move off the support cup. When this is complete, valve 82 is closed and the plunger is displaced by an air cylinder, for example, to forcefully displace the ball to its final position as shown in Figure 4 at the end of the reduced diameter of the oil inlet hole 54 against a stop formed by a tapered surface 106. The volume of oil pushed into the system as the ball is displaced from the juncture of the enlarged and reduced diameter portions to the end of its displacement is a defined volume which is chosen to deflect the top of the diaphragm back to its original flat neutral condition (relaxed state). Oil will flow through holes 110 (Figure 7) in the support cup and a number of nubs 108 will facilitate the separation of the diaphragm 46 from the support cup 100. When the preload pressure inlet assembly 70, 72, 74 and chuck 76 are removed, the diaphragm will be ideally neutral and no pressure will be transmitted from the diaphragm, across the oil to the pressure sensor 50. The module can be calibrated by determining the sensed pressure after assembly. The spacing between the neutral diaphragm and the support cup is sufficient so that any sensed pressure will not be sufficient to push the diaphragm against the support cup. Accordingly, any pressure applied to the diaphragm will be transmitted through the noncompressible oil to the sensor and will be read by the system.

The sensed pressure and temperature data from the upstream and downstream pressure/temperature transducers of each heat transfer device is supplied from the electronics portion 112 via wire connections to a register/transmitter (RT) 18 in the form of a microprocessor based package near one of the two temperature/pressure transducers which computes the square root of the change in pressure and multiplies the square root of the change in pressure by the change in temperature (°F) to create a "Product" which augments an upwardly indexable meter register.
The meter register, along with serial number and diagnostic data is nominally transmitted every eight hours to a collector/transmitter C/T 19. The installer notes the type of heat exchanger (Heat Transfer Device "X") associated with the serial number of the associated register/transmitter and provides this information to the operator of the Host Computer 20 who inputs this data into the host computer. The type of heat transfer device could also be inputted to the computer as a portion of the serial number data transmitted from the register/transmitter. The operator also inputs into the computer the catalog data for heat transfer device "X" from the manufacturer's catalog. The Host Computer accordingly retains in memory the catalog data for all types of heat transfer devices.

The first two columns in the chart illustrated in Figure 5 illustrate data generally available from the catalog of the producer of a specific heat transfer device used (HTD "X"). The manufacture provides, for a number of flow rates (gpm), the pressure drop across the heat transfer device (device x). The third column of the chart is a computation of the square root of the change in pressure and the last column illustrates that the division of the flow rate by the square root of the change in pressure is a constant. Figure 6 illustrates the operation of a Register/Transmitter which evaluates pressure data from a pair of Pressure/Temperature Transducers located on either side of a heat transfer device. At timed intervals (five minutes, for example), the current pressure readings are inputted and the square root of the change in pressure is computed. At the same time temperature (degrees F) data from the two Pressure/Temperature Transducers is also inputted and the Register/Transmitter computes the corresponding change in temperature.

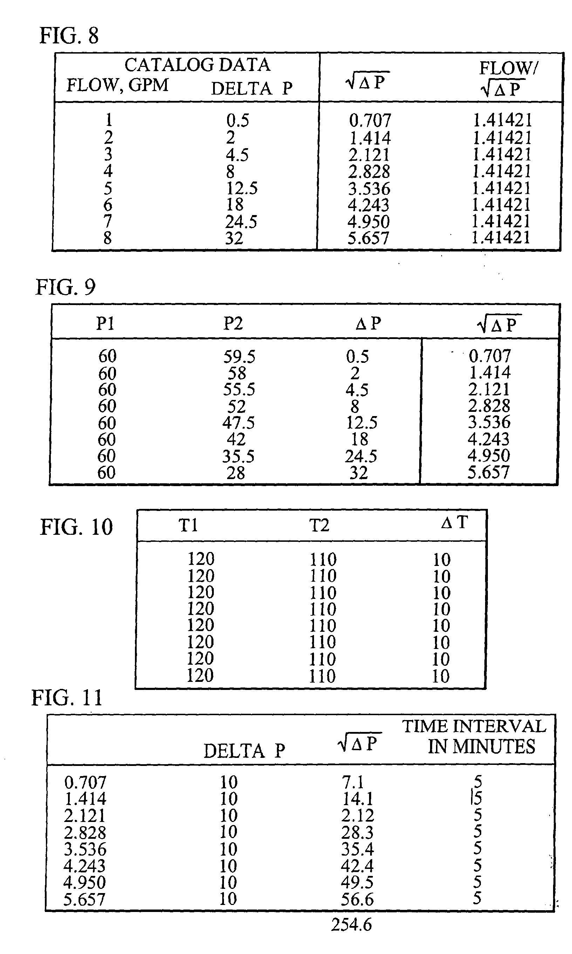

Figure 8 illustrates the state of the Register/Transmitter after eight readings. The register, which accumulates the discrete square root of the change in pressure times the change in temperature computations, totals 254.6 (accumulated units) after 8 five-minute time intervals.

The Register/Transmitter periodically transmits the current accumulated units to a transmitter T and then to he Host Computer. The host computer receives as inputs catalog data for HTD "X" and the identification of the heat transfer device (HTD "X") for a particular serial number. The host computer receives accumulated units for a specific serial number, translates the serial number into HTD "X" and uses the stored catalog data for that device to convert the accumulated units into BTU's. The energy used in BTU's for this catalog data for a corresponding heat transfer device accordingly equates to
8.33 (Gallons) (Delta T in F°) or
8.33(Gallons/Minute)(Minutes)(Delta T in F°) or
8.33(Square Root of delta P) (Delta T in F°)(Constant) (Minutes) or
8.33(254.6) (1.41421) (5) = 14996 BTU's.

## Claims

1. A system for monitoring the use of heat energy use of a heat transfer device within an apartment unit (10), comprising
a register/transmitter (18),
a pair of pressure/temperature transducers (14) to be connected proximate the upstream and downstream sensing points of a heat transfer device (12) for supplying temperature and pressure data to said register/transmitter,
said register/transmitter (18) including
computational means for periodically multiplying the square root of the change in pressure times the change in temperature from the pressure and temperature data supplied from said pair of pressure/temperature transducers (14),
accumulating means for accumulating the computed square root of the change in pressure times the change in temperature, and
means for periodically transmitting information identifying the heat transfer device (12), and the accumulated computed square root of the change in pressure times the change in temperature.

2. A system according to claim 1, wherein the computational means of said register/transmitter (18) comprises first computational means, and said system further comprises host computer means (20) including
receiver means for receiving the heat transfer device-identifying information and the accumulated computed square root of the change in pressure times the change in temperature and
second computational means for
identifying the specific heat transfer device (12) and
computing the BTU's of the received accumulated computed square root of the change in pressure times the change in temperature with stored catalog data for the specific heat transfer device identified.

3. A system according to claim 2, wherein said second computational means comprises means for multiplying the accumulated computed square root of the change in pressure times the change in temperature by
a. the time duration between the periodic multiplying of the square root of the change in pressure times the change in temperature,
b. 8.33, and
c. a constant defined by dividing a flow rate by the square root of the pressure drop across the heat transfer device (12) for that flow rate as defined in the manufacturer's catalogue for that heat transfer device.

4. A system according to claim 2 or 3, wherein said means for periodically transmitting the accumulated computed square root of the change in pressure times the change in temperature additionally transmits the information identifying the heat transfer device, such as the serial number of the heat transfer device (12), and wherein the host computer means (20) receives as inputs the specific type of heat transfer device associated with that identifying information/serial number and catalog data for that specific type of heat transfer device.
